# EUROPÄISCHE PATENTSCHRIFT

(11) **EP 1 532 376 B1**
(45) Veröffentlichungstag und Bekanntmachung des Hinweises auf die Patenterteilung: **20.08.2008**
(21) Anmeldenummer: 03770977.1
(22) Anmeldetag: 18.07.2003
(51) Int. Cl.: F16C 17/08, F16C 39/06

(54) **ANORDNUNG MIT EINEM GLEITLAGER**
DEVICE COMPRISING A PLAIN BEARING
DISPOSITIF POURVU D'UN PALIER LISSE

(30) Priorität: 30.08.2002 DE 20213404 U
(43) Veröffentlichungstag der Anmeldung: 25.05.2005
(73) Patentinhaber: ebm-papst St. Georgen GmbH & Co. KG, 78112 St. Georgen (DE)
(72) Erfinder: DOEMEN, Benno, 78112 St. Georgen (DE)
(74) Vertreter: Raible, Tobias
(86) Internationale Anmeldenummer: PCT/EP2003/007846
(87) Internationale Veröffentlichungsnummer: WO 2004/020850

(56) Entgegenhaltungen:
- DE-A- 2 741 062
- DE-A- 3 528 121
- DE-A- 3 731 710
- US-A- 3 934 950

## Beschreibung

Die Erfindung betrifft eine Anordnung mit einem Gleitlager, welches ferromagnetisches Material, insbesondere Sintereisen, enthält, und welches zur radialen Lagerung einer Welle aus ferromagnetischem Material dient.

Wenn eine Welle in einem radialen Gleitlager gelagert wird, hat sie stets ein axiales Spiel, d.h. ihre axiale Lage ist nicht genau definiert. Man kann dieses axiale Spiel durch Begrenzungen einengen. Diese Begrenzungen können z.B. die Form von Absätzen der Welle haben, oder von Wellenringen. Wenn diese an einer Stirnseite einer Gleitlagerbuchse anliegen, erzeugen sie ein zusätzliches Reibmoment, und falls man solche Lösungen bei Laufwerken mit unterschiedlicher Gebrauchslage verwendet, lässt das (noch) vorhanden Axialspiel ein Klappern zu. (Mit Gebrauchslage bezeichnet man die Lage, z.B. waagerecht oder senkrecht, die der Motor im Betrieb einnimmt.)

Bei Gleitlagern mit senkrechter oder nahezu senkrechter Wellenposition haben sich sogenannte Spurlager bewährt. Bei ihnen drückt das Eigengewicht des Rotors über ein kuppenförmiges Wellenende auf eine ebene Lagerscheibe und dort auf eine kleine Fläche, und wegen des kleinen Radius des Wellenendes wird nur ein relativ kleines Verlust-Reibungsmoment erzeugt, und die axiale Wellenposition ist definiert, aber nur sofern das Laufwerk in der vorgesehenen Gebrauchslage montiert wird.

Die JP 10292819 zeigt eine Lageranordnung mit einem Gehäuse, dessen eine Seite geschlossen ist, und in dem ein poröses Radiallager mit einem Magnetfluid F zur Lagerung einer Welle angeordnet ist. Zwischen dem geschlossenen Ende des Gehäuses und der Welle sind ein axial magnetisierter Ringmagnet und ein innerhalb des Ringmagnets angeordnetes Drehlager vorgesehen. Das Drehlager dient zur Aufnahme radialer und axialer Lasten und wird durch den Ringmagneten magnetisiert, wodurch das Magnetfluid zur Drehlagerfläche hingezogen wird und dort für eine Schmierung des Drehlagers sorgt.

Es ist eine Aufgabe der Erfindung, eine neue Anordnung der eingangs genannten Art bereit zu stellen.

Nach der Erfindung wird diese Aufgabe gelöst durch den Gegenstand des Anspruchs 1. Bei dieser Lösung werden verschiedene ferromagnetische Elemente, von denen die meisten ohnedies vorhanden sind, dazu verwendet, in Verbindung mit mindestens einem axial magnetisierten Dauermagneten einen magnetischen Kreis durch das Spurlager zu erzeugen. Dadurch erhält man eine definierte magnetische Anziehungskraft zwischen Spurkuppe und Anlageglied, und je nach Größe und Stärke des verwendeten Dauermagneten kann diese Anziehungskraft bei der Dimensionierung des Spurlagers vom Konstrukteur festgelegt werden.

Auf diese Weise gelingt es, z.B. bei Lüftern mit beliebiger Gebrauchslage (waagerecht, senkrecht etc.) in verlustarmer Weise eine Kraft bereit zu stellen, die in jeder Gebrauchslage die oben beschriebene Funktion eines Spurlagers spielfrei gewährleistet, also ohne Klappern. Dabei kann ein solches Spurlager ggf. das Eigengewicht des Rotors und evtl. auch noch andere in axialer Richtung wirkende Kräfte aufnehmen, wie das aus der nachfolgenden Beschreibung deutlich wird.

Bevorzugt ist das Gleitlager in einem Lagertragrohr angeordnet, das mit dem Innenstator eines Außenläufermotors verbunden ist. Dies ermöglicht eine einfache und kompakte Bauweise. Bei einer anderen bevorzugten Weiterbildung der Erfindung ist die Welle mit ihrem einen Ende mit dem Boden des Außenrotors verbunden, so dass sich eine einfache Lagerung dieses Außenrotors ergibt. Bei einer sehr vorteilhafte Ausgestaltung ist der axial magnetisierte Dauermagnet als Magnetring ausgebildet, der im wesentlichen in Richtung seiner Längsachse magnetisiert ist. Dies erlaubt eine kompakte Bauweise. Dort, wo eine hohe magnetische Anziehungskraft zwischen Spurkuppe und Anlageglied gewünscht wird, verwendet man mit Vorteil einen vorzugsgerichteten Keramik-Magnetring, welcher besonders vorteilhafte magnetische Eigenschaften hat und deshalb die Generierung einer hohen magnetische Anziehungskraft ermöglicht.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel. Es zeigt:
- Fig. 1: einen stark vergrößerten Längsschnitt durch einen zum Antrieb eines Lüfters dienenden Außenläufermotors, der mit einer erfindungsgemäßen Anordnung versehen ist, und
- Fig. 2: einen nochmals vergrößerten Ausschnitt aus Fig. 1.

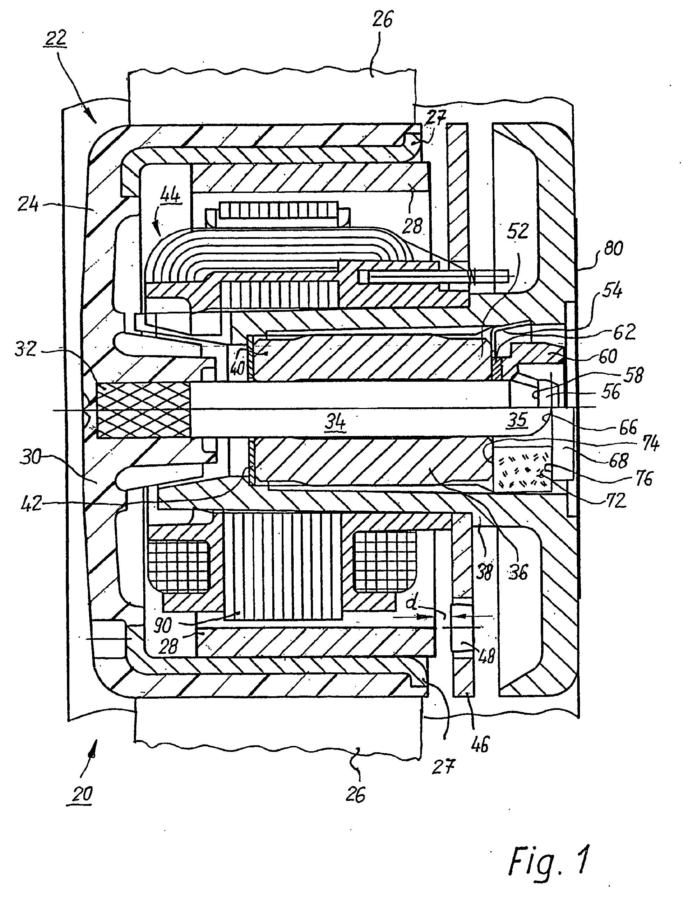

**Fig. 1** zeigt, etwa fünffach vergrößert, einen Längsschnitt durch einen Außenläufermotor 20 üblicher Bauart, wie er bevorzugt zum Antrieb von sehr kleinen Lüftern Anwendung findet. Der Motor 20 hat einen Außenrotor 22 mit einer Rotorglocke 24 aus Kunststoff, an deren Außenumfang Lüfterflügel 26 eines Axiallüfters vorgesehen sind, die im Betrieb, je nach Drehrichtung und bezogen auf Fig. 1, entweder den Rotor 22 nach links.ziehen oder nach rechts pressen.

In der Rotorglocke 24 ist ein magnetischer Rückschluss 27 aus Weicheisen befestigt, und auf seiner Innenseite ein radial magnetisierter Rotormagnet 28, der z.B. vierpolig magnetisiert sein kann.

Die Rotorglocke 24 hat einen Boden 30, in dem ein geriffeltes oberes Wellenende 32 einer Rotorwelle 34 durch Kunststoffspritzen befestigt ist, deren unteres, freies Wellenende mit 35 bezeichnet ist.

Zur radialen Lagerung der Welle 34 dient ein Gleitlager 36, welches ferromagnetisches Material, bevorzugt Sintereisen, enthält. Dieses ist im Inneren eines Lagertragrohres 38 durch Einpressen befestigt und liegt mit seinem in Fig. 1 linken Ende 40 gegen eine im Lagertragrohr 38 angeordnete Ringscheibe 42 an, durch welche die Welle 34 hindurchragt.

Auf der Außenseite des Lagertragrohres 38 ist der Innenstator 44 des Motors 20 befestigt, außerdem eine Leiterplatte 46, in welcher, wie dargestellt, ein Hall-IC 48 befestigt ist, der vom Streufeld des Rotormagneten 28 gesteuert wird, weshalb der Abstand d zwischen dem Rotormagneten 28 und dem Hall-IC 48 kritisch ist, möglichst klein sein und nicht schwanken sollte. Aus diesem Grund ist es wichtig, dass die Welle 34 relativ zum Lagertragrohr 38 eine konstante axiale Lage einnimmt und nach Möglichkeit in dieser Lage festgehalten wird.

Die axiale Lage der Welle 34 ist deshalb schwierig zu sichern, weil die Welle 34 bei Kleinstlüftern nur einen Durchmesser in der Größenordnung von 1 bis 3 mm hat, was eine mechanische Sicherung sehr erschwert und bei kleinen Wellendurchmessern sogar unmöglich machen kann, denn dann hat die Welle 34 nur noch den Durchmesser einer Nähnadel.

Fig. 1 zeigt im oberen Teil eine konventionelle Art der Sicherung. Das untere Ende 52 des Gleitlagers 36 wird hier durch einen Krallenring 54 gesichert, dessen Krallen sich bei der Montage in der Innenseite des Lagertragrohres 38 eingraben und dort verhaken.

Die Welle 34 hat bei dieser bisherigen Version an ihrem Endbereich 56 eine Ringnut 58, in die ein Halteglied 60 eingerastet wird. Seine in Fig. 1 linke Seite stützt eine Ringscheibe 62, die zwischen diesem linken Ende und dem rechten Ende 52 des Gleitlagers 36 liegt und dazu dient, an dieser Stelle Reibungsverluste zu verringern.

Diese Art der Befestigung dient gleichzeitig als Axiallager und als axiale Sicherung für die Welle 34, schwächt aber - durch die Ringnut 58 - die Welle 34.

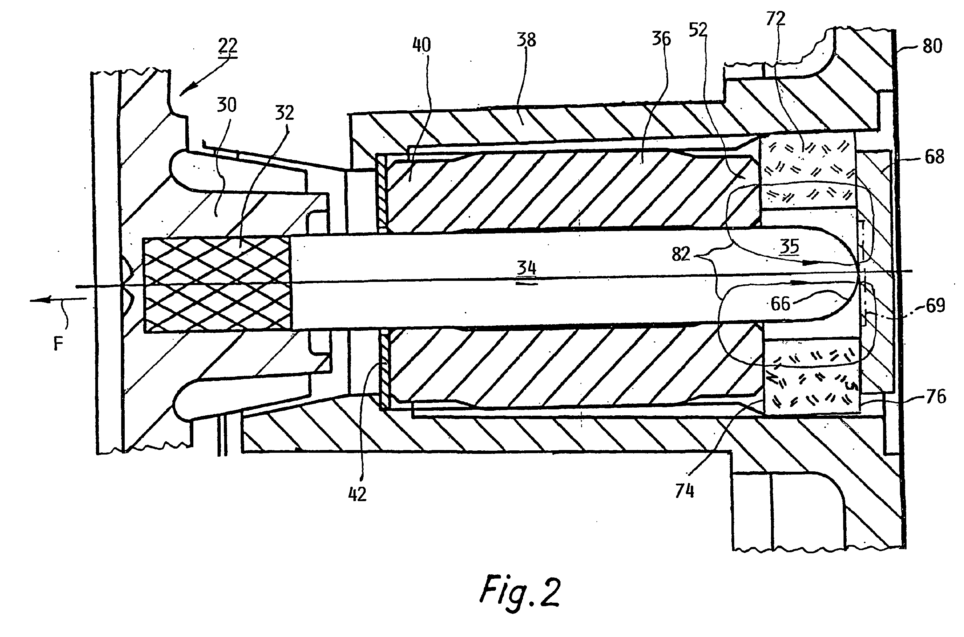

Fig. 1 zeigt unten eine Anordnung nach der Erfindung. Diese ist - in sehr stark vergrößertem Maßstab - auch in **Fig. 2** dargestellt.

Bei dieser Lösung ist die Welle 34 im Bereich ihres freien Endes 35 mit einer sogenannten Spurkuppe 66 versehen, also einem glatten, abgerundeten Ende, welches gegen ein Anlageglied 68 aus einem ferromagnetischen Werkstoff anliegt, z.B. eine Scheibe aus Sintereisen, oder eine Stahlscheibe. Die Spurkuppe 66 bildet mit diesem Anlageglied 68 ein Axial-Gleitlager, das auch als Spurlager bezeichnet wird.

Bevorzugt wird zwischen die Spurkuppe 66 und das Anlageglied 68 eine dünne Schicht 69 (bevorzugt 0,2 bis 0,3 mm) aus einem geeigneten Kunststoff mit niedrigem Reibungskoeffizienten eingefügt, z.B. aus gehärtetem PTFE, so dass die Spurkuppe 66 gegen diese Schicht 69 anliegt. Die Schicht 69 befindet sich bevorzugt nur im Zentrum des Anlageglieds 68 und erstreckt sich nicht bis zum Magnetring 72, vgl. Fig. 2.

Zwischen dem in Fig.2 rechten Ende 52 des radialen Gleitlagers 36 und dem Anlageglied 68 befindet sich ein axial magnetisierter Magnetring 72, bevorzugt ein vorzugsgerichteter ("anisotroper") Keramik-Magnetring. Seine in Fig. 2 linke Stirnfläche 74 und seine rechte Stirnfläche 76 sind auf eine exakte Distanz voneinander geschliffen, während für Innen- und Außendurchmesser grobe Toleranzen zulässig sind. Diese Stirnflächen 74, 76 stellen die Pole des Magnetrings 72 dar.

Mit seiner Stirnfläche 74 liegt der Magnetring 72 gegen die Seite 52 des Gleitlagers 36 an. Gegen den radial inneren Teil seiner Stirnfläche 76 liegt das ferromagnetische Anlageglied 68 an, so dass es durch den Magnetring 72 am Gleitlager 36 festgehalten wird. Sofern letzteres genügend fest im Lagertragrohr 38 eingepresst ist, genügt das als Befestigung für die Teile 68 und 72. Andernfalls können diese durch einen Krallenring (analog dem Krallenring 54) zusätzlich im Lagertragrohr 38 gesichert werden. Eine Sicherung ergibt sich auch durch ein Klebeschild 80 aus Metall, welches die untere Öffnung des Lagertragrohres 38 überdeckt und als Typenschild dient.

Wie Fig. 2 besonders gut zeigt, sollte das Anlageglied 68 bevorzugt einen etwas kleineren Außendurchmesser haben als der Magnetring 72, um die Entstehung von Streufeldern am äußeren Rand des Anlageglieds 68 nach Möglichkeit zu verhindern. Ferner zeigt Fig. 2 schematisch Flusslinien 82 in einem magnetischen Kreis. Nimmt man an, dass sich an der Stirnfläche 74 des Magnetring 72 ein Nordpol befindet, so gehen von dort die Feldlinien 82 durch das Gleitlager 36 zur Welle 34 und durch diese, über die Spurkuppe 66 und das Anlageglied 68 zurück zum Südpol an der Stirnseite 76 des Magnetrings 72. Naturgemäß könnte der Magnetring 72 auch umgekehrt polarisiert sein, d.h. seine Polarisierung spielt keine Rolle, was die Montage vereinfacht. Die dünne Kunststoffschicht 69 wirkt wie ein kleiner Luftspalt in diesem magnetischen Kreis 82, was aber keine wesentliche Reduzierung der Anziehungskraft zur Folge hat.

Da die Welle 34 im Gleitlager 36 zumindest in begrenztem Maße axial verschiebbar ist, kann der Rotor 22 sehr einfach montiert werden, indem die Welle 34 in das Gleitlager 36 gesteckt, dabei durch den Magnetring 72 angezogen und gegen das Anlageglied 68 gepresst wird.

Vorteilhaft ist bei der Erfindung, dass für die Bildung des magnetischen Kreises, der durch die Feldlinien 82 angedeutet ist, überwiegend Teile verwendet werden, die ohnedies vorhanden sind, so dass zusätzliche Kosten nur für den Magnetring 72 entstehen. In der Welle 34 treten keine Polwechselverluste auf, da der magnetische Fluss in der Welle 34 seine Größe oder Richtung nicht ändert. Die Feldlinien vom Dauermagnet 72 über das Sinterlager 36 zur Welle 34 werden bei Rotation von der Welle 34 geschnitten, so dass in der Wellenoberfläche elektrische Spannungen induziert werden. Diese sind aber wegen des geringen Durchmessers der Welle 34 klein und haben wegen des relativ großen spezifischen Widerstands der harten Stahlwelle 34 nur sehr geringe Wirbelströme zur Folge, also nur sehr kleine Verluste.

Mit der Erfindung lassen sich relativ große Haltekräfte erzeugen. Bei einem Labormuster, das etwa ein Fünftel der Größe des Motors 20 gemäß Fig. 1 hatte, wurde in horizontaler Lage, also wie in Fig. 2 dargestellt, der Rotor 22 mit einer Kraft F vom Magnetring 72 weggezogen. Dabei blieb die Spurkuppe 66 bis zu einer Kraft von F = 320 g = 3,1 N in Kontakt mit dem Anlaufglied 68. Die Welle 34 hatte dabei einen Durchmesser von 3 mm. Der Magnetring 72 hatte eine Länge von 9 mm, einen Außendurchmesser von 8,5 mm, und einen Innendurchmesser von 4,2 mm. Da der Rotor 22 ein Gewicht von 22 Gramm hatte, bleibt das Spurlager 66, 68 bei einer solchen Anordnung bis zu einer Beschleunigung von etwa dem Zehnfachen der Erdbeschleunigung geschlossen und klappert nicht.

Dies ermöglicht es, Kräfte zu kompensieren, welche auf den Rotor 22 wirken, z.B. dessen eigenes Gewicht, sofern der Motor 20 so montiert wird, dass der Rotor 22 nach unten hängt, oder eine Kraft, die von den Flügeln 26 bei der Erzeugung des Luftstromes als Reaktionskraft erzeugt wird, oder eine Kraft, die durch eine unsymmetrische Lage des Rotormagneten 28 relativ zum Blechpaket 90 des Stators 44 entsteht und die in Fig. 1 in Richtung nach links wirkt, weil der Rotormagnet 28 bestrebt ist, eine symmetrische Lage relativ zum Blechpaket 90 einzunehmen, und schließlich, wie erläutert, Beschleunigungskräfte bis zu einer bestimmten Höhe.

Die Erfindung eignet sich besonders gut für die Anwendung in Fahrzeugen aller Art, wo erhebliche Beschleunigungen auftreten können und trotzdem ein ruhiger Lauf verlangt wird. Dies gilt besonders für kleine Außenläufermotoren, die zum Antrieb von Lüftern oder dergleichen dienen. Solche Motoren haben oft sehr kleine Abmessungen, und durch die Erfindung wird es wesentlich einfacher, ihren Rotor so zu lagern, dass im Bereich des Spurlagers kein Klappern auftritt.

Naturgemäß sind im Rahmen der vorliegenden Erfindung vielfältige Abwandlungen und Modifikationen möglich. Dort, wo keine große axiale Kraft erzeugt werden muss, kann man einen dünnwandigen Magnetring 72 verwenden, oder man kann einen oder mehrere Einzelmagnete verwenden. Auch kann man das Anlageglied 68 so ausbilden, dass es Polschuhe zur Anlage gegen den Magnetring 72 hat, oder man kann es mit einem oder mehreren Stabmagneten verkleben und bei der Montage in das Lagertragrohr 38 einsetzen. Solche oder ähnliche Modifikationen liegen im Rahmen der vorliegenden Erfindung. Auch kann die Erfindung bei anderen Motortypen verwendet werden, z.B. bei sogenannten eisenlosen Motoren, besonders solchen mit einem flachen Luftspalt.

## Patentansprüche

1. Anordnung
- mit einem Gleitlager (36), welches ferromagnetisches Material, insbesondere Sintereisen, enthält und welches zur radialen Lagerung einer Welle (34) aus ferromagnetischem Material dient, welche Welle (34) in diesem Gleitlager (36) drehbar und axial verschiebbar angeordnet ist und ein freies Ende (35) aufweist,
- mit einem an diesem freien Ende (35) vorgesehenen Spurlager, welches eine an diesem freien Ende (35) vorgesehene Spurkuppe (66) und ein mit letzterer zusammenwirkendes Anlageglied (68, 69) aufweist, welches zumindest teilweise aus ferromagnetischem Material besteht,
- und mit mindestens einem Dauermagneten (72), der im Bereich um das freie Wellenende (35) zwischen dem dortigen axialen Ende des Gleitlagers (36) und dem Anlageglied (68) angeordnet ist, um einen magnetischen Kreis (82) vom einen Pol (74) des mindestens einen Dauermagneten (72) über
• das Gleitlager (36),
• das freie Wellenende (35),
• die Spurkuppe (66),
• und das Anlageglied (68)
zum anderen Pol (76) des mindestens einen Dauermagneten (72), und **dadurch** eine definierte magnetische Anziehungskraft zwischen der Spurkuppe (66) und dem Anlageglied (68), zu bewirken.

2. Anordnung nach Anspruch 1, welche als Teil eines Außenläufermotors (20) ausgebildet ist, wobei das Gleitlager (36) in einem Lagertragrohr (38) angeordnet ist, mit welchem der Innenstator (44) dieses Motors (20) verbunden ist.

3. Anordnung nach Anspruch 2, bei welcher die Welle (34) mit ihrem vom freien Ende (35) abgewandten Endbereich (32) am Boden eines topfartigen Außenrotorteils (24) dieses Motors (20) befestigt ist.

4. Anordnung nach einem der vorhergehenden Ansprüche, bei welcher der im wesentlichen axial magnetisierte Dauermagnet als Magnetring (72) ausgebildet ist, der etwa in einer Richtung parallel zu seiner Längsachse magnetisiert ist.

5. Anordnung nach einem der Ansprüche 2 oder 3, und nach Anspruch 4, bei welcher der Magnetring (72) mit seinem Außenumfang im Lagertragrohr (38) geführt ist.

6. Anordnung nach Anspruch 4 oder 5, bei welcher der Magnetring als vorzugsgerichteter Keramik-Magnetring (72) ausgebildet ist.

7. Anordnung nach einem der vorhergehenden Ansprüche, bei welcher der zur Erzeugung einer magnetischen Anziehungskraft vorgesehene Dauermagnet (72) im wesentlichen parallel zur Achsrichtung der Welle (34) magnetisiert ist.

8. Anordnung nach einem der vorhergehenden Ansprüche, bei welcher im Bereich der Anlage der Spurkuppe (66) gegen das Anlageglied (68) an letzterem eine Anlagefläche (69) aus Kunststoff vorgesehen ist.

9. Anordnung nach Anspruch 8, bei welcher die Anlagefläche (69) einen reibungsarmen Kunststoff aufweist.

10. Anordnung nach Anspruch 8 oder 9, bei welcher die Anlagefläche (69) so dimensioniert ist, dass sie im Bereich des Übergangs vom Anlageglied (68) zum Dauermagneten (72) keinen magnetisch wirksamen Luftspalt bildet.

## Claims

1. Arrangement
- with a sliding bearing (36), which contains ferromagnetic material, in particular sintered iron, and which is used as a radial bearing for a shaft (34) of ferromagnetic material, which shaft (34) is arranged in this sliding bearing (36) so that it can rotate and move axially, and has a free end (35),
- with a footstep bearing, which is provided on this free end (35), and has a step rounding (66), which is provided on this free end (35), and a contact element (68, 69) which co-operates with the latter and consists at least partly of ferromagnetic material,
- and with at least one permanent magnet (72), which is arranged in the region around the free shaft end (35) between the axial end there of the sliding bearing (36) and the contact element (68), to cause a magnetic circuit (82) from one pole (74) of the at least one permanent magnet (72) via
• the sliding bearing (36),
• the free shaft end (35),
• the step rounding (66),
• and the contact element (68),
to the other pole (76) of the at least one permanent magnet (72), and therefore a defined magnetic attraction force between the step rounding (66) and the contact element (68).

2. Arrangement according to Claim 1, which is designed as part of an external rotor motor (20), the sliding bearing (36) being arranged in a bearing stay pipe (38), to which the internal stator (44) of this motor (20) is connected.

3. Arrangement according to Claim 2, wherein the shaft (34) is fixed at its end area (32) facing away from the free end (35) to the floor of a pot-like external rotor part (24) of this motor (20).

4. Arrangement according to one of the preceding claims, wherein the essentially axially magnetised permanent magnet is in the form of a magnetic ring (72), which is magnetised approximately in a direction parallel to its longitudinal axis.

5. Arrangement according to one of Claims 2 or 3, and to Claim 4, wherein the magnetic ring (72) is guided with its external circumference in the bearing stay pipe (38).

6. Arrangement according to Claim 4 or 5, wherein the magnetic ring is in the form of a grain-oriented ceramic magnetic ring (72).

7. Arrangement according to one of the preceding claims, wherein the permanent magnet (72), which is provided to generate a magnetic attraction force, is magnetised essentially parallel to the axial direction of the shaft (34).

8. Arrangement according to one of the preceding claims, wherein in the region of contact of the step rounding (66) against the contact element (68), on the latter a contact surface (69) of plastic is provided.

9. Arrangement according to Claim 8, wherein the contact surface (69) has a low-friction plastic.

10. Arrangement according to Claim 8 or 9, wherein the contact surface (69) is dimensioned so that in the transition region from the contact element (68) to the permanent magnet (72), it does not form a magnetically effective air gap.

## Revendications

1. Dispositif
- avec un palier lisse (36) qui contient un matériau ferromagnétique, en particulier du fer fritté, et qui sert au logement radial d'un arbre (34) en matériau ferromagnétique, lequel arbre (34) est disposé à rotation et à coulissement axial dans ce palier lisse (36) et présente une extrémité libre (35),
- avec une crapaudine prévue à cette extrémité libre (35), laquelle présente une calotte de crapaudine (66) prévue à cette extrémité libre (35) et un élément de contact (68, 69) coopérant avec ladite calotte de crapaudine, lequel consiste au moins en partie en matériau ferromagnétique,
- et avec au moins un aimant permanent (72) qui est disposé dans la zone autour de l'extrémité d'arbre libre (35) entre l'extrémité axiale correspondante du palier lisse (36) et l'élément de contact (68) pour former un circuit magnétique (82) d'un pôle (74) dudit au moins un aimant permanent (72) à l'autre pôle (76) dudit au moins un aimant permanent (72) en passant par
• le palier lisse (36),
• l'extrémité d'arbre libre (35),
• la calotte de crapaudine (66),
• et l'élément de contact (68),
et ainsi créer une force d'attraction magnétique définie entre la calotte de crapaudine (66) et l'élément de contact (68).

2. Dispositif selon la revendication 1, lequel est réalisé en tant que partie d'un moteur à induit extérieur (20), le palier lisse (36) étant disposé dans un tube support de palier (38) auquel le stator intérieur (44) de ce moteur est relié.

3. Dispositif selon la revendication 2, dans lequel l'arbre (34) est fixé par sa région terminale (32) opposée à son extrémité libre (35) au fond d'une partie de rotor extérieur (24) en forme de pot de ce moteur (20).

4. Dispositif selon l'une des revendications précédentes, dans lequel l'aimant permanent magnétisé essentiellement axialement est réalisé sous forme de bague magnétique (72) qui est magnétisée à peu près dans une direction parallèle à son axe longitudinal.

5. Dispositif selon l'une des revendications 2 ou 3 et selon la revendication 4, dans lequel la bague magnétique (72) est guidée par sa périphérie extérieure dans le tube support de palier (38).

6. Dispositif selon la revendication 4 ou 5, dans lequel la bague magnétique est réalisée sous forme de bague magnétique en céramique (72) à direction préférentielle.

7. Dispositif selon l'une des revendications précédentes, dans lequel l'aimant permanent (72) prévu pour produire une force d'attraction magnétique est magnétisé essentiellement parallèlement à la direction axiale de l'arbre (34).

8. Dispositif selon l'une des revendications précédentes, dans lequel une surface de contact (69) en matière plastique est prévue dans la zone du contact de la calotte de crapaudine (66) contre l'élément de contact (68), sur ce dernier.

9. Dispositif selon la revendication 8, dans lequel la surface de contact (69) présente une matière plastique à faible frottement.

10. Dispositif selon la revendication 8 ou 9, dans lequel la surface de contact (69) est dimensionnée de façon à ne pas former d'entrefer magnétiquement actif dans la zone de transition de l'élément de contact (68) à l'aimant permanent (72).
